# EUROPEAN PATENT APPLICATION

(11) **EP 1 986 161 A1**
(43) Date of publication of application: **29.10.2008**
(21) Application number: 07425251.1
(22) Date of filing: 27.04.2007
(51) Int. Cl.: G07C 9/00, G06F 21/20

(54) **Data survey device, integrated with a communication system, and related method**

(71) Applicant: Italdata Ingegneria Dell'Idea S.p.A., 00128 Roma (IT)
(72) Inventor: Boccacci Roberto c/o Italdata -Ingegneria Dell'idea S.p.a., 00128 Roma (IT)
(74) Representative: Leone, Mario

(57) **Abstract**

A device (1) for surveying and checking identification data, integrated with a communication system, and a related method not only allow the collection of a wide range of sensitive identification data, but also the processing thereof and the transmission thereof in an encrypted form, assigning to them precise time and position references, and employs: means for the digital taking of data, in particular visual and/or sound data; positioning means; means for measuring time; digital transmission means; a microprocessor (24); encryption means for sensitive data; means for identifying a device user; a software assigning a time and position reference to the visual and/or sound data and translating them in a encrypted form identifying the device user.

## Description

The present invention is related to a device for surveying and checking data, integrated with a communication system. The invention also concerns a method for the surveying and the certification of sensitive and identification data, and evidence as well.

Devices are known, performing various functions in checking and identifying data. However, many kinds of verification exist, requiring the implementation of processes different to each other, and needing to communicate with suitable centralized databases and with other devices.

Further, it is intended that such devices must satisfy severe security standards, for preventing that the collected and checked data are altered and for keeping this kind of device from an improper use.

The object of the present invention is to provide an integrated device, not only able to perform different functions on controlled data collection, but also owning high communication and security capabilities.

This object is achieved by a device as above specified, comprising:
* means for taking visual and/or sound data;
* positioning means, namely of the satellite kind;
* means for measuring time;
* digital transmission means;
* a microprocessor;
* encryption means for sensitive data;
* means for identifying a device user;
* a software assigning a time and position reference to the visual and/or sound data and translating them in a encrypted form identifying the device user.

Embodiments of such a device provide scanning and character and/or image and/or sound recognition software. Input and output means can be provided, which can comprise a touch-screen as input device, a keyboard and at least one microphone.

Means for identifying a device user can comprise a sensor for the reading of a microchip or another card integrated within the device itself. Said sensor can also be used for the verification of identity documents and for the reading of biometric data.

Means for taking visual and/or sound data can comprise either means for the taking of images of the photographic type, or means for shooting video, or even means for the taking of fingerprints or possibly means for the iris scan, and at least one microphone.

Positioning means, namely of the satellite type, can include a satellite antenna operating according to the GPS standard or to another equivalent systems.

Digital transmission means can include cellular communication means operating according to one of the known standards (GSM, GPRS, UMTS etc.), wireless transmission means, for instance according to Wi-Fi or Bluetooth standards, wire means operating through properly arranged communication plugs, or a combination of the above means.

The main advantage of the above defined device is to allow not only the collection of a wide range of identifying sensitive data, but also the processing and the transmission thereof through a cryptographic form, assigning to them precise timing and positioning references.

Thus, the invention is referred to a method for the survey and the treatment of visual and/or sound data, comprising the steps of:
* taking said visual and/or sound data by digital taking means;
* assigning to a file resulting from said visual and/or sound data a time and/or position reference, and a reference related to the identity of the surveying operator;
* encrypting the resulting file and allocating it for the digital transmission thereof.

The present invention will be hereinafter disclosed according to one preferred embodiment thereof, provided to an exemplificative and non limitative purpose with reference to the annexed drawings wherein:
* Figure 1 shows a perspective view of a device for surveying and checking data, integrated with a communication system, according to the invention, illustrating the functions thereof:
* Figure 2 shows a global perspective view of the device of figure 1 with an accessory;
* Figure 3 shows a perspective view of a detail inside the device of figure 1;

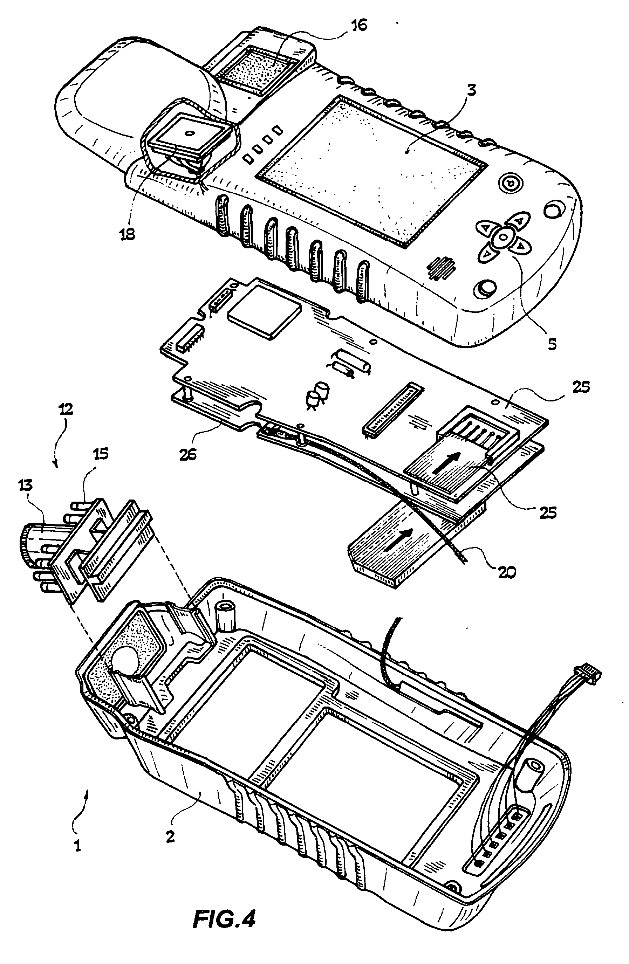

* Figure 4 shows a perspective view of the exploded device of figure 1; and
* Figures 5, 6 and 7 show diagrams related to the connections among the electronic components of the device of figure 1.

With reference to the figures, a device ready for the survey, the check and the transmission of identifying data is globally indicated as 1.

It comprises a solid body 2, made of anti-shock material and completely sealed, suitable for protecting the inside even from weather elements. The surface of the body 2 of the device 1 is anti-slip. It can resist even to impacts and crashes. In particular, the body 2 can be consistent with IP54 standard, i.e. it can operate in presence of dust and water spray and it cannot be penetrated by pointed items.

According the general appearance thereof, the device 1 is a hand-held equipment, suitable to be grasped by one hand and provided with a graphic interface on the front surface thereof.

On such a surface, the device 1 comprises a screen 3 of the touch-sensitive kind *(touch screen),* thus operating as an input and output device. Again on this surface, a display on and off button 4 is present together with a keyboard 5 of the kind suitable for translating a cursor, with a cursor keypad, a central enter key and other two function keys.

The device 1 also includes sound detection and recording means, and a loudspeaker, represented as a microphone inlet 6 on the body 2 of the device 1. The microphone and the loudspeaker are suitable for the use as telephone.

The screen 3 allows a graphic output but also a graphic input through suitable function icons in graphic menus. Of course, either a conventional numeric keypad can be displayed, or an alphanumeric keyboard.

Such touch-sensitive screen 3, the keyboard 5 and the microphone 6 globally constitute input and output means of the device 1.

Further, function lights are present, globally indicated as 7, indicating different operational functions of the device.

On the side surfaces, plugs are present for the audio connection 8, the power supply 9 and a PC connection 10, e.g. of the USB type. However, it is intended that any data transfer plug can be provided, suitable for the transmission of data in a digital form. The audio connection plug 8 can be preferably connected to earphones of the telephone mentioned above.

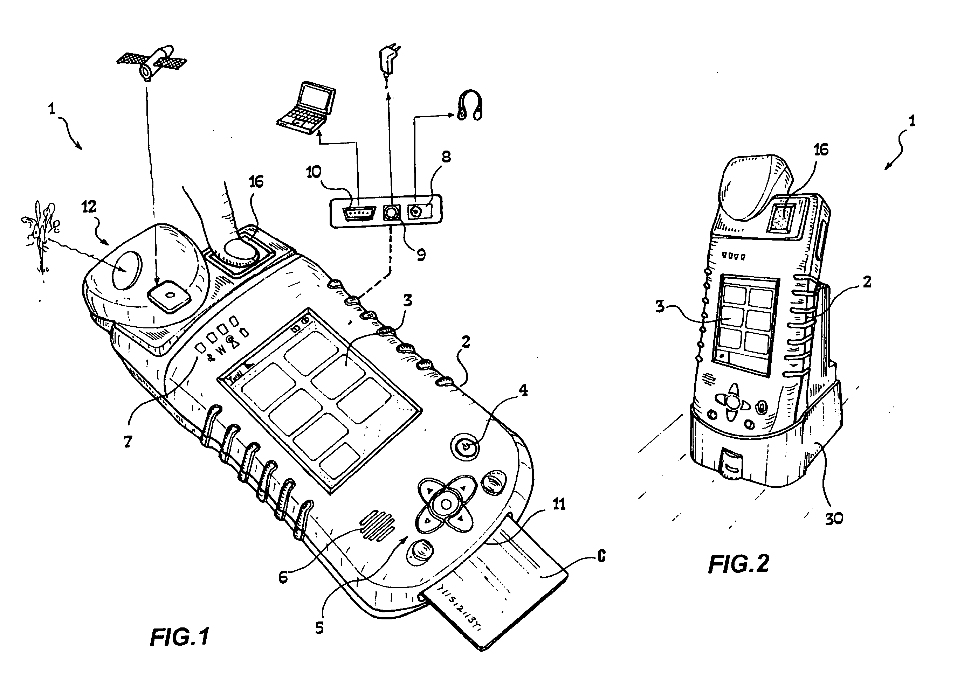

The device also has further plugs and can also operate through a suitable docking station 30 (Figure 2).

At the bottom side surface, the device 1 comprises a slit 11 for the introduction of a card C, and inside the device is provided with a sensor for the microchip reading.

Such a sensor can operate for the verification of documents equipped with microchip, containing the identification data of an individual. This sensor can anyway operate as means for identifying an operator using the device for the survey of evidence or the like.

As a matter of fact, the device can be arranged to operate only after the introduction of an identification document of an operator whose name is mentioned in a list of authorized operators. The device 1 also records the identity of the user for assigning it to the obtained data.

On the opposite side surface, the device 1 comprises means for the taking of images 12 of the digital type, capable of photographic performances and of shooting video. Such means for the taking of images 12 comprises a objective 13 placed in front of a sensor 14 and surrounded by lightening members 15 of the LED type, for lightening the image to be shot. Advantageously, such LED's emit normal light and infrared light.

Also said means for the taking of images 12 can operate as means for identifying the operator using the device 1 for the survey of evidence and the like, e.g. through a face recognition or through the iris scan. In the same way, said sound detection and recording means can operate as means for identifying the operator using the device 1 for the survey of evidence or the like, e.g. by identifying the operator's voice tone.

The device 1 further comprises means for the taking of fingerprints, including a scanning surface 16 of the silicon type. The latter, as it is apparent, can operate as means for identifying the operator using the device 1 for the survey of evidence or the like, e.g. by identifying one operator's fingerprint.

In particular, the operation of the device 1 can be available only after the introduction of a chip card wherein an identifying datum of the operator is recorded, e.g. a fingerprint, and after the verification of such a datum, e.g. through the scanning surface 16. In this manner, the device is not linked to only one operator but the latter must identify himself before using the device. Precautions of the same time may be adopted also for the validation of the collected data.

Then, positioning means is provided, namely of the satellite type, comprising an appropriately protected GPS antenna 18. The device according to the present embodiment comprises cellular communication means, and to this purpose the device 1 comprises inside a pair of slots 19 receiving SIM cards, to put the device in condition to be operated as a portable cellular phone according to one of the available standards, e.g. GSM, UMTS and so on. It is intended that, through such communication means, the device can be linked to a network.

The inner part of the device 1 houses an antenna 20 for the cellular communication, e.g. a GSM antenna, a battery 21 and an encryption card 22, a memory card 23 and a processor 24. A portable memory card 25 can be provided, also for the transfer of the collected data.

The encryption card 22, together with the microprocessor 24, constitutes encryption means for identification sensitive data, to transmit them wireless in a completely safe manner. As a matter of fact, the code used as a basis for the information encryption is contained in said card, i.e. in a memory element thereof, and it is employed by the microprocessor 24 for translating said pieces of information in an encrypted file, protected from further modifications, which can be read by an apparatus including the same encryption code.

In particular, the task of the encryption card 22 is to assign to a file a digital signature, advantageously of the type with asymmetric double key.

Among the capabilities thereof, the device also enumerates further wireless communication systems, namely according to the Wi-Fi® and the Bluetooth® standards.

The cellular communication means, the plugs for the wire transmission and the above mentioned wireless communication systems, and other analogous systems, constitute digital transmission means of the device 1.

The device also comprises means for measuring time, i.e. a digital clock which is suitable to assign a taking time to the collected data.

Finally, the device, as before mentioned enclosed within a sealed body, has means for detecting a tampering of said body, for ensuring the safety of the collected data. The software loaded in the device 1 has the object of assigning to the obtained data a time reference, a positioning reference and a reference concerning the identity of the operator, collected by the previously detailed means.

The software allows to the device also further functionalities, in particular image management, scan and character recognition, e.g. for reading plates, bar codes, strips according to the MRTD standard and so on, positioning of the device on a map, time measuring and so on.

Beside the above described capabilities, the device 1 can be equipped for reading a RFID chip, e.g. for the reading of biometric data of passports and the like.

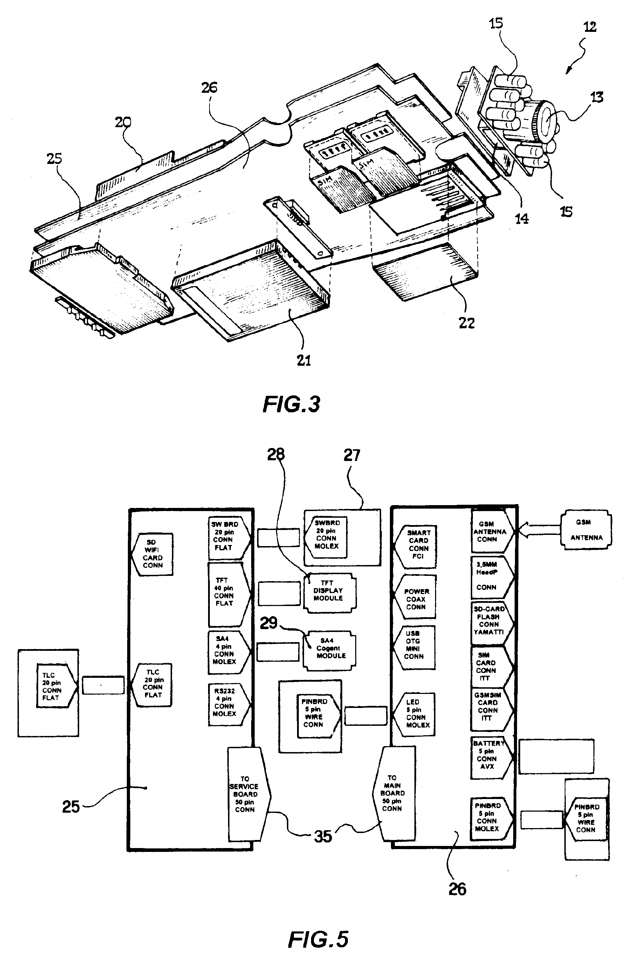

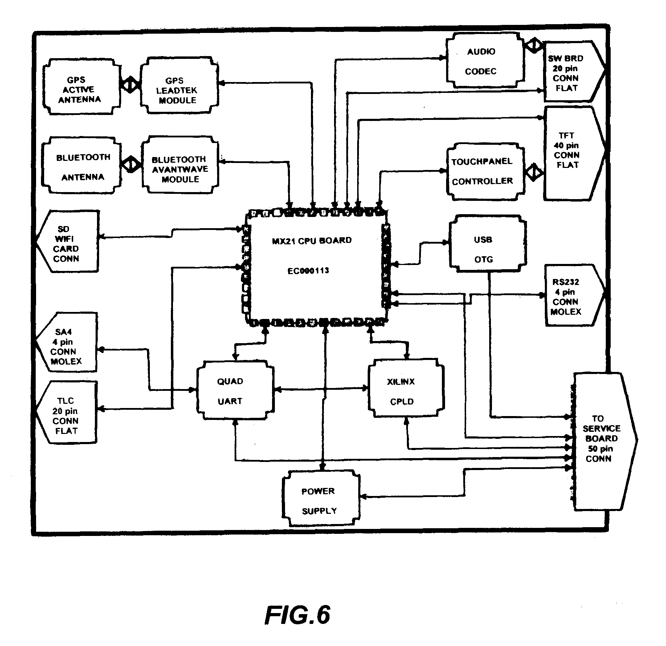

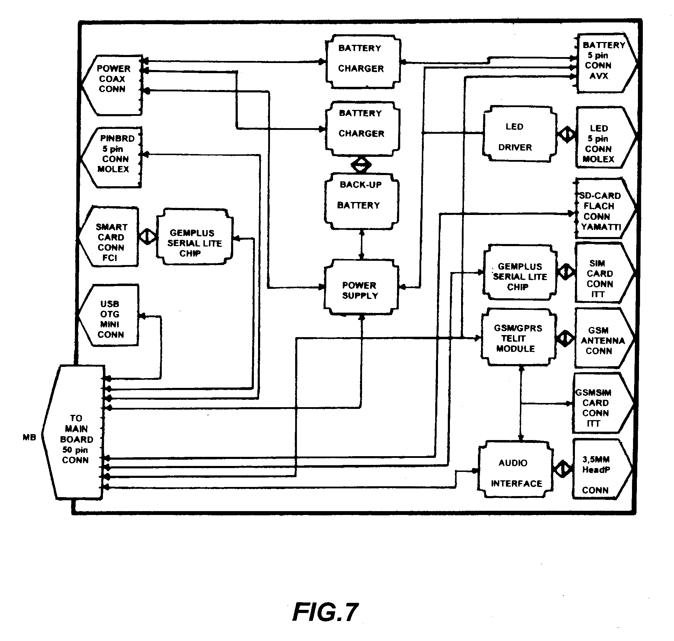

The above mentioned capabilities are illustrated in the diagrams of Figures 5, 6 and 7. The device 1 comprises a main board 25, with the processor 24, and an auxiliary board 26. The first one in connected to the telephone module 27, the touch-sensitive screen module 28 and to the fingerprint reader module 29. The second one is connected to the GSM antenna 20 and to the battery 21. Of course, the two boards are connected to each other through a connection 35.

With reference to the method for the survey and the treatment of visual and/or sound data, it is specified that as visual and sound data are intended all those data resulting from a digital scan or a digital sound recording, producing hence a data file which is stored within the device 1.

For instance, visual and/or sound data are constituted by a video and/or audio recording, a photographic image, the scan of an image and the pieces of information thereby obtained, like a registration code, the data contained in a reading strip according to the MRTD-ICAO standard, the data contained in a bar code and the like, the scan of a fingerprint, the data obtained from an electronic document chip, the scan of a face or of a voice tone or others.

The object of the method is to translate one or more of those pieces of information in an objective item, suitable as a legal proof, of which it is therefore known the exact time of the finding, where the finding occurred and the identity of the operator as well.

Apart from the latter information, the time reference and the positioning reference must not be assigned by an operator, but they must be automatically assigned by the device 1 through its own means.

Therefore, said method comprises a step wherein said visual and/or sound data are taken by digital taking means, producing a file which remains protected inside the device.

At the same time, said method provides a step wherein a time reference and/or a positioning reference or both are assigned to said resulting file, according to the required proof standard.

Further, a reference concerning the operator carrying out the survey is assigned to the file, provided to the device at the turn-on or at the instant of the proof validation.

After, the resulting file is encrypted according to an encryption code already loaded within the device 1, and unalterable.

At this point, the file is arranged for the digital transmission, e.g. through every one of the above described communication means.

For instance, it can be transferred either to a personal computer or to a mainframe, or possibly duplicated according to the information management requirements.

Moreover, further functionalities of the method can be provided. In particular, pieces of information contained in the file can be transferred to a mainframe connected to one or more databases for the verification of the found pieces of information.

In this way, if the information is referred to a car plate, the operator can be informed on all the data of the car itself and of the owner thereof. These data are transmitted from the mainframe to the device, e.g. through cellular telephone network or the Internet, of course using, for transmitting and for receiving, secure connections.

In any occurrence, the transmitted and received data are encrypted, and they can be in case de-encrypted, either by the main frame or by the device itself.

In the same way, the operator can receive the identification data of an individual easily transmitting the scan of his fingerprint, or the scan of his face or his voice tone, of course if there is the possibility to be connected to a database wherein such data are available.

During the electronic document check, the operator can have at his disposal the pieces of information available in the document, but also further auxiliary pieces of information as crime notices, order of arrest, reception instructions.

It is intended that the use of a device according the one as above described is particularly useful to the police in the public order management, at the custom check, in the collection of legal evidence and so on.

However, such a device can be used also in a civilian, administrative or private context as well, e.g. for having the reception of a hotel facility released from a fixed desk, for checking the exclusive admittance to a civilian, industrial, search facility and so on.

To the above disclosed device for surveying and checking data, integrated with a communication system, a man skilled in the art, to the purpose of achieving further and contingent needing, can introduce additional and several modifications and variants, moreover all of them included within the protection scope of the present invention, as defined by the annexed claims.

## Claims

1. Device (1) for the survey of data, integrated with a communication system, comprising:
* means for the digital taking of data, in particular visual and/or sound data;
* positioning means;
* means for measuring time;
* digital transmission means;
* a microprocessor (24);
* encryption means for sensitive data;
* means for identifying a device user;
* a software assigning a time and position reference to the visual and/or sound data and translating them in a encrypted form identifying the device user.

2. Device (1) according to claim 1, further comprising a scanning and character and/or image and/or sound recognition software.

3. Device (1) according to claim 1, further comprising a sensor for microchip reading.

4. Device (1) according to claim 1, wherein said means for the digital taking comprises means for the taking of images of the photographic type, or means for shooting video.

5. Device (1) according to claim 1, wherein said means for the digital taking comprises means for the taking of fingerprints.

6. Device (1) according to claim 1, wherein said means for the digital taking comprises means for the iris scanning.

7. Device (1) according to claim 1, wherein said means for the digital taking comprises at least one microphone.

8. Device (1) according to claim 1, wherein the positioning means is of the satellite kind.

9. Device (1) according to claim 1, wherein the digital transmission means comprises cellular communication means.

10. Device (1) according to claim 1, wherein the digital transmission means wireless transmission means.

11. Device (1) according to claim 1, wherein the digital transmission means comprises wire means operated through suitably arranged plug.

12. Device (1) according to claim 1, comprising a completely sealed solid body (2), provided with anti-tampering means.

13. Device (1) according to claim 12, embodied by a hand-held device, suitable to be grasped by one hand and provided with an interface on the front surface thereof, and comprising input and output means.

14. Device (1) according to claim 12, wherein said input and output means comprises a screen (3).

15. Device (1) according to claim 14, wherein said screen (3) is a touch-screen.

16. Device (1) according to claim 14 or 15, wherein said input and output means comprises a keyboard (5).

17. Device (1) according to claim 7, wherein said means for the digital taking comprises sound detection and recording means.

18. Device (1) according to claim 1, comprising at least one loudspeaker.

19. Device (1) according to claim 1, comprising means operable as a telephone.

20. Device (1) according to claim 19, comprising an audio connection plug (8), which can be connected to earphones of a telephone.

21. Device (1) according to claim 4, wherein said means for the taking of images of the photographic type and for shooting (12) comprises an objective (13) placed in front of a sensor (14) and surrounded by lightening members (15) of the LED type, for lightening the image to be shot.

22. Device (1) according to claim 21, wherein the lightening members (15) of the LED type emit normal light and infrared light.

23. Device (1) according to claim 4, wherein the means for identifying the operator using the device (1) comprises image taking means (12)

24. Device (1) according to claim 7, wherein the means for identifying the operator using the device (1) comprises at least one microphone.

25. Device (1) according to claim 3, wherein the means for identifying the operator using the device (1) comprises a microchip reading sensor.

26. Device (1) according to claim 5, wherein the means for identifying the operator using the device (1) comprises means for taking fingerprints.

27. Device (1) according to claim 5, wherein said means for taking fingerprints comprises a scanning surface (16).

28. Device (1) according to claim 8, wherein the satellite positioning means comprises a GPS antenna (18), appropriately protected from interferences.

29. Device (1) according to claim 12, wherein the encryption means for sensitive data comprises an encryption card (22) inside said body (2).

30. Device (1) according to claim 12, wherein the means for measuring time comprises a digital clock, capable of assigning a time reference to the collected data inside said body (2).

31. Method for the survey and the treatment of visual and/or sound data, comprising the steps of:
* taking said visual and/or sound data by digital taking means;
* assigning to a file resulting from said visual and/or sound data a time and/or position reference, and a reference related to the identity of the surveying operator;
* encrypting the resulting file and allocating it for the digital transmission thereof.

32. Method according to claim 31 wherein the visual and/or sound data comprise a video and/or audio recording, photographic images, an image scan and the pieces of information thereby obtained as a registration number, the data container in a reading strip according to the MRTD-ICAO standard, the data contained in a bar code, the scan of a fingerprint, the data from the microchip of an electronic document, the scan of a face or of a voice tone.

33. Method according to claim 31, wherein both a time reference and a positioning reference are assigned.

34. Method according to claim 31 o 33, wherein the time reference and the positioning reference are automatically assigned.

35. Method according to claim 31, wherein the file arranged for the digital transmission is transmitted through a protected line or connection.

36. Method according to claim 35, wherein said file arranged for the digital transmission is transferred to a mainframe connected to one or more databases for the verification of the collected pieces of information.

37. Method according to claim 31, providing a step of recognition of the operator.

38. Method according to claim 37, wherein an asymmetric double key is assigned to the file arranged for the digital transmission.
